Europäisches Patentamt

European Patent Office

Office européen des brevets

(11) Numéro de publication : **0 632 310 A1**

# (12) DEMANDE DE BREVET EUROPEEN

(21) Numéro de dépôt : **94401478.6**

(22) Date de dépôt : **29.06.94**

(51) Int. Cl.$^6$ : **G02F 1/03, H01S 3/133**

(30) Priorité : **01.07.93 FR 9308068**

(43) Date de publication de la demande :
**04.01.95 Bulletin 95/01**

(84) Etats contractants désignés :
**AT BE CH DE ES GB IT LI NL SE**

(71) Demandeur : **ALCATEL CIT**
**12 Rue de la Baume**
**F-75008 Paris (FR)**

(72) Inventeur : **Morin, Stéphane**
**14, rue des Frères Lagadec**
**F-22300 Lannion (FR)**
Inventeur : **Giraud, Franck**
**Gueradur**
**F-22560 Pleumeur Bodou (FR)**

(74) Mandataire : **Sciaux, Edmond et al**
**c/o SOSPI,**
**14-16 rue de la Baume**
**F-75008 Paris (FR)**

(54) **Dispositif d'asservissement de la tension de polarisation d'une source optique.**

(57)  Un exemple de réalisation comporte :
— un laser à semiconducteur (11) ;
— un modulateur du type Mach-Zehnder (13) ;
— un additionneur analogique (12) pour additionner un signal de modulation (Vm) représentant des données binaires et une tension continue de polarisation (Vb) ;
— un coupleur (18) prélevant une fraction du signal optique modulé ;
— une photodiode (19) ;
— un amplificateur (20) ;
— un filtre basse bande (21) accordé sur une fréquence égale au rythme de transmission de données binaires ;
— un amplificateur (22) ;
— un détecteur d'amplitude (23) ayant une constante de temps très supérieure à la période du signal filtré ;
— un amplificateur (24) ;
— un microprocesseur (16) associé à un convertisseur analogique-numérique (17), et à un convertisseur numérique-analogique (15), modifiant la tension de polarisation (Vb) de façon à rendre l'amplitude de la raie extraite par le filtre et le détecteur d'amplitude, inférieure à une valeur de seuil fixée.
Application aux transmissions optiques numériques.

FIG.4

EP 0 632 310 A1

L'invention concerne la régulation du fonctionnement d'une source optique dont la puissance d'émission est modulée par une tension de commande qui est la somme d'une tension continue dite de polarisation et d'une tension dite de modulation, pouvant prendre au moins deux valeurs discrètes et représentant une suite de valeurs numériques ayant un rythme fixé. L'invention concerne plus particulièrement les sources dont la caractéristique (puissance d'émission en fonction de la tension de commande) est utilisée dans une zone où elle présente un centre de symétrie pour une valeur dite optimale de la tension de polarisation, et qui correspond à une tension de commande variant dans une plage de valeurs centrée sur cette valeur optimale.

Deux types de source peuvent avoir une telle caractéristique :

- des sources à modulation interne, tel qu'un laser à semi-conducteur, dont la puissance d'émission est modulée en faisant varier le courant électrique injecté dans ce laser;
- ou des sources à modulation externe, telle qu'un laser, à émission continue, associé à un modulateur d'amplitude, commandable électriquement. Le modulateur peut être par exemple du type interféromètre Mach-Zehnder, ou du type à électro-absorption.

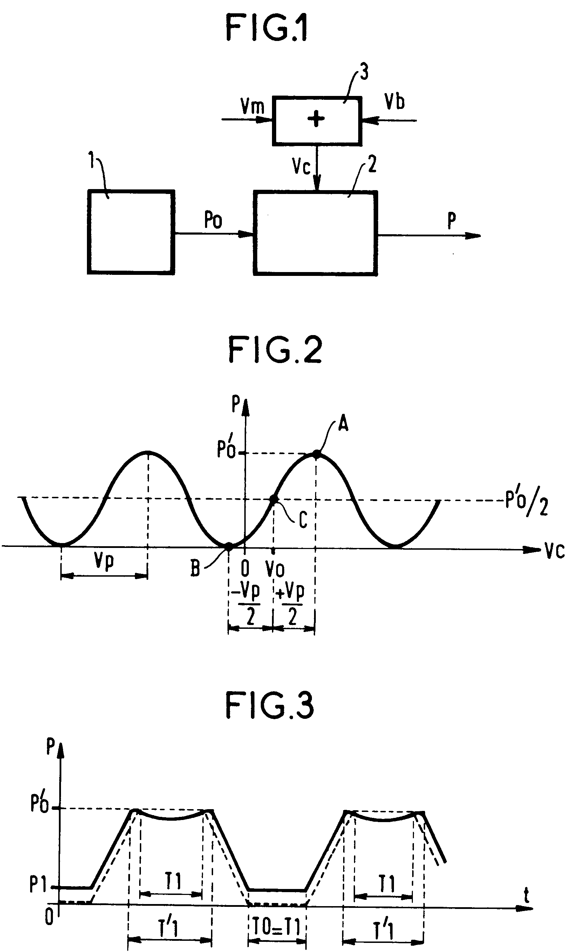

La figure 1 représente le schéma synoptique d'une source optique à modulation externe. Elle comprend : un laser à semi-conducteur, 1; un modulateur 2, du type Mach-Zehnder; et un additionneur analogique 3. Le laser 1 émet un faisceau lumineux de puissance constante $P_0$, qui est appliqué à une entrée du modulateur 2. Le modulateur 2 reçoit sur une entrée de commande électrique une tension $V_c$ fournie par la sortie de l'additionneur 3. Une sortie optique du modulateur 2 fournit un faisceau lumineux modulé en amplitude, ayant une puissance variable P. L'additionneur 3 fait la somme d'une tension continue de polarisation $V_b$ et d'une tension de modulation $V_m$ représentant une suite de données binaires.

La figure 2 représente la caractéristique de cette source, c'est-à-dire le graphe de la puissance de sortie P en fonction de la tension de commande $V_c$. Le graphe $P(Vc)$ d'un modulateur de type Mach-Zehnder parfait est une sinusoïde de période 2Vp, où la valeur de la demi-période Vp est inhérente à la structure du modulateur. Pour réaliser la modulation, le graphe est exploité sur une portion de sinusoïde ayant une pente de signe constant, par exemple la région AB, en plaçant le point de fonctionnement sur un point d'inflexion C de la sinusoïde. Cette caractéristique est susceptible de dériver, notamment sous l'influence de la température, en se déplaçant parallèlement à l'axe des abscisses. Par conséquent, la portion de sinusoïde ACB se déplace par rapport à la tension de polarisation, considérée comme fixe.

Pour une transmission de signal numérique, comportant par exemple deux ou trois niveaux discrets, la linéarité de modulation n'est pas absolument nécessaire. Il est donc possible d'exploiter toute la région AB, de façon à avoir un taux de modulation maximal. La puissance de sortie P varie alors entre 0 et $P'_0$ qui est la puissance maximale fournie par le modulateur lorsqu'on lui applique la puissance $P_0$ en entrée.

Un procédé pour obtenir une telle modulation consiste à appliquer à l'entrée de commande du modulateur une tension de commande $V_c$ centrée sur une valeur $V_0$, correspondant au point d'inflexion C qui est le centre de symétrie de la région AB, et ayant une amplitude $\pm \dfrac{Vp}{2}$. Il faut alors appliquer à une entrée de l'additionneurs 3 une tension de polarisation $V_b=V_0$, et sur l'autre entrée une tension de modulation $V_m$ centrée sur une tension nulle, et d'amplitude $\pm \dfrac{Vp}{2}$.

Dans l'exemple représenté sur la figure 2, la tension $V_0$, qui est la tension de polarisation optimale, a une certaine valeur positive. En pratique, la tension $V_0$ n'est pas constante. Elle dérive, notamment en fonction de la température du modulateur 2. L'ensemble de la caractéristique $P(Vc)$ se déplace parallèlement à l'axe des abscisses Vc. Si la tension de polarisation $V_b$ est fixée, elle ne peut pas coïncider avec la tension $V_0$ optimale lorsque celle-ci dérive. La conséquence est une déformation du signal optique émis, soit du côté du point A, soit du point B, sur le graphe $P(Vc)$.

La figure 3 illustre ce phénomène de déformation en représentant, par des traits continus, la puissance de sortie P(t) en fonction du temps t, pour un signal binaire prenant les valeurs 101, lorsque la dérive de la caractéristique provoque un déplacement du point de fonctionnement vers le point A de la caractéristique. Le signal de sortie a alors un niveau bas de puissance, P1, qui n'est pas nul, et un niveau haut de puissance qui passe deux fois par la valeur $P'_0$ mais qui comporte un minimum relatif entre ces deux maximums.

Il y a une déformation du signal transmis, puisque le niveau haut n'a plus une puissance constante. En outre, la variation de puissance $P'_0-P_1$ est plus faible que dans le cas où le point de fonctionnement serait resté parfaitement en coïncidence avec le centre de symétrie C de la caractéristique. La figure 3 représente en pointillés la forme du signal de sortie dans ce dernier cas.

Cette dérive de la caractéristique provoque une certaine fermeture du diagramme de l'oeil, et donc une augmentation du taux d'erreurs de transmission. C'est pourquoi il est nécessaire d'asservir la tension de polarisation $V_b$ sur les variations de la tension $V_0$ correspondant au centre de symétrie.

On connaît deux méthodes d'asservissement de la tension de polarisation $V_b$ sur la valeur optimale $V_0$.

Une première méthode d'asservissement est décrite dans l'article "Novel automatic bias voltage control for travelling-wave electrode optical modulators", Electronics Letters, vol.27, 23 mai 1991 de Kataoka et al. Selon cette méthode, un second flux lumineux traverse le modulateur dans le sens opposé à celui du flux lumineux modulé par les données à transmettre. Ce second flux est également modulé et l'observation de sa modulation permet d'asservir la tension de polarisation.

Le principal inconvénient de cette méthode est l'emploi d'une source optique supplémentaire et de deux coupleurs à maintien de polarisation, dont la connexion au modulateur est délicate à réaliser. Il s'ensuit des problèmes de fiabilité du dispositif. De plus, un tel dispositif pose des problèmes d'encombrement et de perte, dus à l'insertion des deux coupleurs optiques; et son coût est important.

Une deuxième méthode d'asservissement est décrite dans l'article "Automatic bias control circuit for Mach-Zehnder modulator", IEICE, Spring National Convention Record, B-976, 1990 de Kuwata et al. Un émetteur laser émet un flux lumineux de puissance constante appliqué à un modulateur Mach-Zehnder. Un signal représentant des données binaires à haute fréquence est appliqué à un modulateur haute-fréquence recevant par ailleurs un signal sinusoïdal de basse fréquence et de faible amplitude. Le signal haute-fréquence modulé par le signal basse-fréquence est appliqué au modulateur Mach-Zehnder. Une fraction du signal optique de sortie du modulateur est prélevée par un coupleur optique, puis est appliqué à une diode de détection, suivie d'un comparateur de phase. Le comparateur de phase compare la phase du signal détecté avec celle du signal à basse-fréquence. Un filtre passe-bas filtre le signal fourni par le comparateur de phase. Le signal filtré représente la différence de tension existant entre la tension de polarisation appliquée au modulateur Mach-Zehnder, et la tension pour laquelle la modulation est optimale, c'est-à-dire la tension continue $V_0$. Cette différence de tension permet de modifier la tension de polarisation.

Ainsi, selon cette deuxième méthode, l'amplitude crête à crête du signal de modulation est modulée autour de sa valeur moyenne par un signal sinusoïdal de faible amplitude et de fréquence basse. Cette modulation du signal de modulation induit une modulation sinusoïdale de la puissance optique moyenne, à basse fréquence. Le déphasage de cette modulation sinusoïdale par rapport au signal sinusoïdal appliqué au modulateur à haute fréquence a le même signe que $V_b - V_0$. L'extraction de ce déphasage permet de réaliser l'asservissement de $V_b$ sur $V_0$.

Cependant, la mise en oeuvre de cette méthode implique l'utilisation d'un modulateur Mach-Zehnder dont le gain est modulé par le signal basse-fréquence. Cette modulation basse-fréquence se comporte comme un bruit vis-à-vis du signal transmis, et dégrade donc le rapport signal sur bruit. Par ailleurs, la réalisation d'un modulateur électronique à haute fréquence, pour moduler l'amplitude du signal haute fréquence par un signal basse-fréquence, est très délicate lorsque le rythme des valeurs numériques transmises est très élevé.

Le but de l'invention est de proposer un dispositif d'asservissement qui n'ait pas les inconvénients des dispositifs connus.

L'objet de l'invention est un dispositif d'asservissement de la tension de polarisation d'une source optique dont la puissance d'émission est modulée par une tension de commande qui est la somme d'une tension continue dite de polarisation et d'une tension dite de modulation, centrée sur une tension nulle; cette tension de modulation pouvant prendre au moins deux valeurs discrètes pour représenter une suite de valeurs numériques ayant un rythme fixé; la puissance émise par cette source étant une fonction au moins approximativement symétrique de la tension de commande par rapport à une valeur, dite optimale, de la tension de polarisation, quand la tension de commande varie dans une plage de valeurs centrée sur cette valeur optimale de la tension de polarisation; et cette valeur optimale étant susceptible de dériver ; ce dispositif comportant :

- des moyens pour prélever une fraction du signal optique émis par la source, et la convertir en un signal électrique appelé signal prélevé;
- des moyens pour détecter un éventuel écart à corriger, entre la valeur de la tension de polarisation et sa valeur optimale;
- et des moyens pour déduire une nouvelle valeur de la tension de polarisation, plus proche de la valeur optimale, s'il y a un écart à corriger;

  caractérisé en ce que les moyens pour détecter un éventuel écart à corriger comportent :
- des moyens pour déterminer, dans le signal prélevé, l'amplitude d'une raie spectrale centrée sur une fréquence égale au rythme des valeurs numériques;
- des moyens pour déterminer s'il y a ou non un écart à corriger, en fonction de l'amplitude de cette raie.

Le dispositif d'asservissement ainsi caractérisé est particulièrement simple à réaliser. Il suffit d'intercaler un seul coupleur, à la sortie de la source optique, pour prélever une fraction du signal optique émis. Les autres moyens nécessaires à la réalisation de l'invention sont des moyens électroniques simples.

L'invention sera mieux comprise et d'autres caractéristiques apparaîtront à l'aide de la description ci-dessous d'un exemple de réalisation et des figures l'accompagnant :

- les figures 1 à 3, qui ont été décrites précédemment, illustrent l'art antérieur;

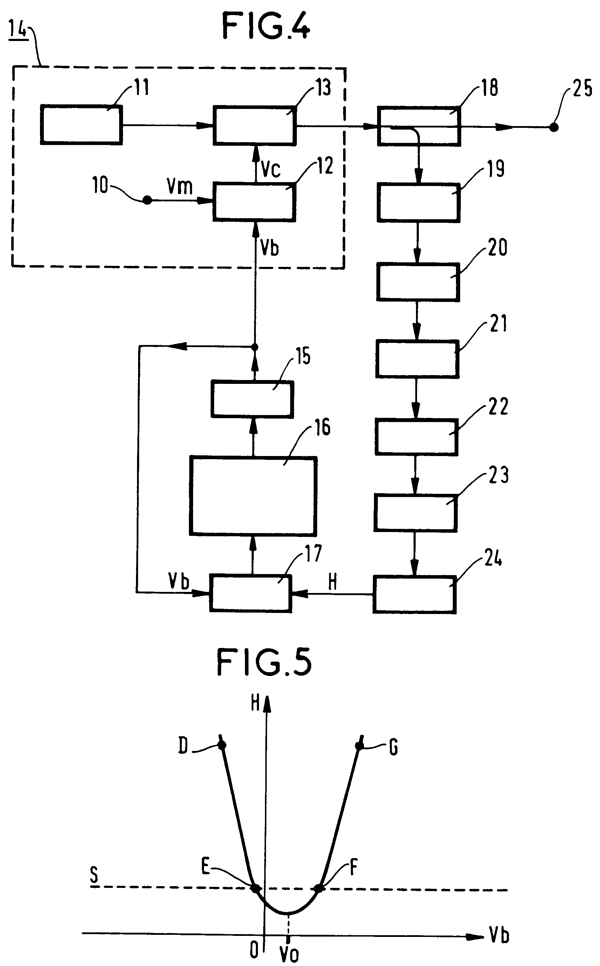

- la figure 4 représente le schéma synoptique d'un exemple de réalisation du dispositif selon l'invention;
- la figure 5 représente un graphe illustrant le fonctionnement de cet exemple de réalisation;
- et la figure 6 représente un organigramme des opérations réalisées successivement au cours de son fonctionnement.

Cet exemple de réalisation comporte :

- une source optique 14 constituée d'un laser à semiconducteur, 11, d'un modulateur 13 de type Mach-Zehnder, et d'un additionneur analogique 12; le laser 11 fournissant un flux lumineux d'amplitude constante à une entrée optique du modulateur 13, ce dernier étant commandé par une tension de commande $V_c$ fournie par une sortie de l'additionneur 12, et restituant un flux optique modulé en amplitude; l'additionneur 12 ayant une première entrée 10 recevant un signal de modulation constitué par une tension $V_m$ prenant soit la valeur $+\dfrac{Vp}{2}$ soit la valeur $-\dfrac{Vp}{2}$; et une entrée recevant une tension de polarisation $V_b$;
- un convertisseur numérique-analogique 15 qui fournit sous forme analogique la tension $V_b$ à la source 14;
- un microprocesseur 16 comportant une mémoire de programme non représentée; ce microprocesseur ayant une sortie couplée à une entrée du convertisseur numérique-analogique 15 pour lui fournir un mot binaire représentant la valeur de la tension $V_b$, qu'il détermine en exécutant le programme stocké dans cette mémoire;
- un convertisseur analogique-numérique 17 ayant une sortie couplée à une entrée du microprocesseur 16 et lui fournissant un mot binaire;
- un coupleur optique 18 ayant une entrée optique reliée à la sortie de la source 14, cette sortie étant constituée par la sortie du modulateur 13; une première sortie 25 du coupleur fournissant 90 % de la puissance restituée par le modulateur 13; et une seconde sortie fournissant 10 % de la puissance restituée par le modulateur 13;
- une photodiode 19 dont l'entrée optique est reliée à la seconde sortie du coupleur 18;
- un amplificateur électronique 20 ayant une entrée reliée à une sortie de la photodiode 19, pour amplifier un signal électrique fourni par la photodiode 19 et représentant le signal optique prélevé par le coupleur 18;
- un filtre passe-bande 21 accordé sur le rythme des données binaires transmises par la source 14, et ayant une bande passante très étroite;
- un amplificateur électronique 22 ayant une entrée reliée à une sortie du filtre 21, et amplifiant le signal filtré par ce filtre;
- un détecteur d'amplitude 23, ayant une entrée reliée à la sortie de l'amplificateur 22, et fournissant un signal électrique analogique représentant l'amplitude du signal restitué par le filtre 21, avec une constante de temps très supérieure à la période des données binaires, pour éliminer les fluctuations d'amplitude dues aux changements de valeur de ces données binaires;
- un amplificateur 24 ayant une entrée reliée à la sortie du détecteur d'amplitude 23; une sortie de l'amplificateur 24 fournissant un signal analogique constitué d'une tension H, à une entrée du convertisseur analogique-numérique 17.

Cette même entrée du convertisseur analogique numérique 17 reçoit alternativement la tension de polarisation $V_b$. Le microprocesseur 16 commande des portes analogiques, non représentées, pour appliquer alternativement la tension H et la tension $V_b$ à l'entrée du convertisseur 17. Ainsi ce convertisseur est commun pour convertir deux tensions $V_b$ et H.

Par exemple, si le rythme des données binaires est de 5 Gb/s, le filtre 21 est accordé sur la fréquence de 5 GHz, et son coefficient de qualité est égal à 1000. La tension H représente l'amplitude de la raie spectrale centrée sur la fréquence 5GHz.

Cette raie a une amplitude nulle lorsque les paliers de niveau bas et les paliers de niveau haut, correspondant à des bits transmis, ont la même durée, dans ce signal optique prélevé par le coupleur 18. Dans le signal de modulation appliqué à l'entrée 10, les paliers de niveau haut et les paliers de niveau bas ont la même durée, car tous les bits ont la même durée, par hypothèse. Pour que cette caractéristique soit maintenue dans le signal optique modulé restitué par le modulateur 13, il faut et il suffit que le point de fonctionnement soit centré sur le centre de symétrie C représenté sur la figure 2. La non-linéarité de la caractéristique étant la même au voisinage des points A et B, en première approximation, la durée des paliers hauts et la durée des paliers bas sont identiques.

Par contre, si le point de fonctionnement n'est pas situé au point C, la durée des paliers hauts et la durée des paliers bas sont affectées de manières différentes. Dans l'exemple représenté sur la figure 3, il apparaît que la durée des paliers hauts, T'1, est supérieure à la durée T1 qu'ils auraient s'il n'y avait pas déformation au voisinage du point A de la caractéristique. Le palier bas, quant à lui conserve sa durée $T_0 = T_1$.

Dès lors que les paliers hauts et les paliers bas n'ont pas la même durée, il apparaît, dans le spectre du signal extrait du flux lumineux modulé, une raie à la fréquence correspondant au rythme des données binaires. Lorsque cette raie a une amplitude supérieure à une valeur de seuil fixée, choisie à un niveau suffisant pour la distinguer du bruit, et correspondant à une déformation non négligeable de la forme du signal modulé, le microprocesseur 16 détermine une nouvelle valeur de la tension de polarisation Vb, en modifiant la valeur courante dans un sens tendant à réduire l'amplitude de la raie. Il réitère le choix d'une nouvelle valeur de Vb jusqu'à ce que l'amplitude de la raie soit devenue inférieure à la valeur de seuil.

La figure 5 représente un graphe de la tension H fournie par l'amplificateur 24 et représentant l'amplitude de la raie, en fonction de la tension de polarisation $V_b$. Ce graphe a approximativement la forme d'une parabole dont l'axe de symétrie est parallèle à l'axe des ordonnées H, et dont le minimum est situé à l'abscisse $V_0$ qui est la tension de polarisation optimale à l'instant considéré. L'ensemble du graphe est translaté parallèlement à l'axe des abscisses Vb lorsque la caractéristique de fonctionnement du modulateur 13 est elle-même translatée à cause d'une dérive. Une tension de seuil S définissant la valeur de seuil fixée pour la raie est supérieure à la valeur de H correspondant à la tension de polarisation optimale $V_0$.

La droite d'équation H=S coupe le graphe en deux points, E et F. Quand la valeur de H est située sur la partie EF du graphe, qui est inférieure au seuil S, la tension de polarisation est considérée comme satisfaisante et le microprocesseur 16 ne cherche pas à la modifier. Lorsque la valeur de H est située sur la branche DE du graphe, qui est la branche ayant une pente négative, le microprocesseur 16 augmente la valeur algébrique de la tension de polarisation $V_b$ de façon à ramener la valeur de H dans la partie EF du graphe. Lorsque la valeur de H est située sur la branche FG du graphe, qui est la branche ayant une pente positive, le microprocesseur 16 réduit la valeur algébrique de la tension de polarisation $V_b$ jusqu'à ce que la valeur de H soit ramenée dans la partie EF du graphe.

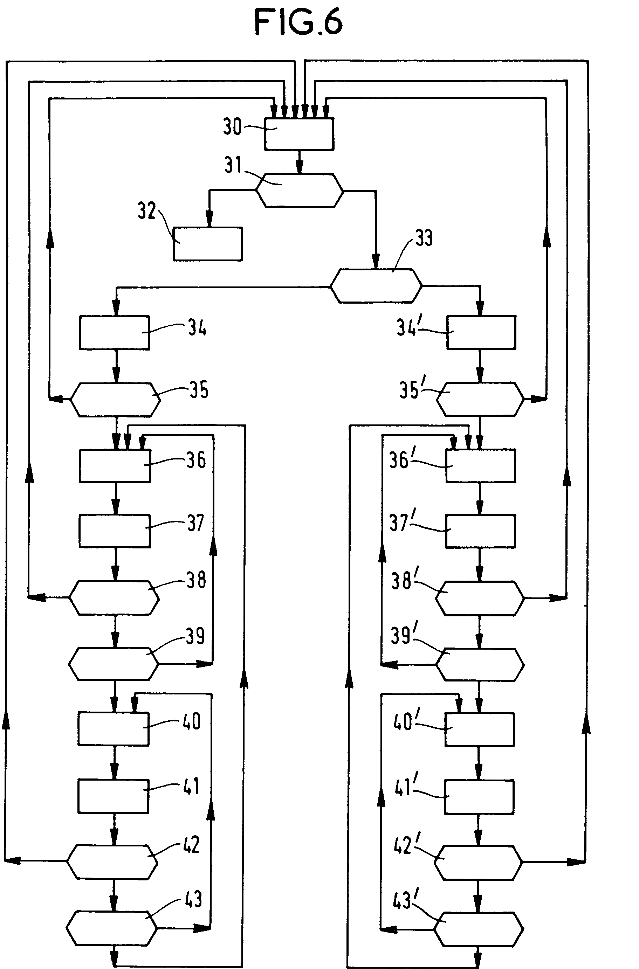

La figure 6 représente l'organigramme des opérations effectuées par le microprocesseur 16 pour appliquer ce procédé d'asservissement. Cet organigramme débute par une lecture 30 de la valeur algébrique courante Vb de la tension de polarisation. Il compare la valeur absolue de $V_b$ à une valeur limite Vlim, par l'opération 31. Si la valeur limite est atteinte ou dépassée, il déclenche une alarme par l'opération 32.

Si la valeur limite n'est pas atteinte ou dépassée, le microprocesseur détermine le signe de la valeur $V_b$. Si le signe est positif ou si Vb est nulle, il réalise des opérations 34 à 43. Si le signe est négatif, il réalise les opérations 34' à 43'.

L'opération 34 consiste en une mesure de la valeur H1 de la tension H représentant l'amplitude de la raie à 5 Ghz. L'opération 35 consiste à comparer la valeur H1 à la valeur de seuil fixée S. Si la valeur H1 est inférieure à la valeur de seuil fixée S, le microprocesseur 16 décide de ne pas modifier la valeur courante Vb de la tension de polarisation, et il recommence les opérations à partir du début de l'organigramme, c'est-à-dire la lecture 30 de la valeur $V_b$ de la tension de polarisation fournie par la sortie du convertisseur numérique-analogique 15.

Si la valeur H1 est supérieure ou égale à la valeur S, le microprocesseur 16 décide de décrémenter d'une unité la valeur $V_b$, par l'opération 36. Il mesure ensuite, par l'opération 37, la nouvelle valeur H2 de la tension fournie par la sortie de l'amplificateur 24. Il compare, par l'opération 38, la valeur H2 à la valeur de seuil S. Si la valeur H2 est inférieure à la valeur de seuil S, le microprocesseur 16 décide de ne plus modifier la valeur Vb de la tension de polarisation, et réitère l'opération 30 située au début de l'organigramme.

Si la valeur H2 est supérieure ou égale à la valeur de seuil S, le microprocesseur 16 compare la valeur H2 avec la valeur H1, par l'opération 39. Si la valeur H2 est inférieure à la valeur H1, c'est-à-dire si l'amplitude de la raie a été diminuée, le microprocesseur 16 décide de réduire encore la valeur algébrique Vb de la tension de polarisation, en réitérant l'opération 36. Dans le cas contraire, l'opération 36 n'ayant pas été un succès, le microprocesseur décide d'incrémenter d'une unité la valeur $V_b$ par l'opération 40. Il mesure ensuite, par l'opération 41, une nouvelle valeur H3 de la tension fournie par la sortie de l'amplificateur 24. Puis il compare la valeur H3 à la valeur de seuil S, par l'opération 42. Si la valeur H3 est inférieure à la valeur de seuil S, le microprocesseur 16 décide de ne pas modifier la valeur algébrique courante $V_b$ de la tension de polarisation, et il réitère l'opération 30 située au début de l'organigramme.

Si la valeur H3 est supérieure ou égale à la valeur de seuil S, le microprocesseur 16 doit modifier encore la tension de polarisation, mais pour savoir dans quel sens, il compare la valeur H3 et la valeur H2 par l'opération 43. Si H3 est supérieure ou égale à H2, cela signifie que la dernière incrémentation de la valeur $V_b$, par l'opération 40, n'a pas été un succès. Par conséquent, le microprocesseur 16 décide de décrémenter la valeur $V_b$ par l'opération 36. Si la valeur H3 est inférieure à la valeur H2, cela signifie que l'incrémentation de la valeur $V_b$ par l'opération 40 a été un succès. Par conséquent, le microprocesseur 16 décide de réitérer l'opération 40.

Les opérations 34' à 43' sont identiques respectivement aux opérations 34 à 43, sauf que la décrémentation 36 est remplacée par une incrémentation 36' de la valeur $V_b$, et que l'incrémentation 40 est remplacée par une décrémentation 40' de la valeur $V_b$, pour tenir compte du fait que la valeur algébrique de $V_b$ n'a pas le même signe pendant les opérations 34' à 43'.

Il est à remarquer que le dispositif d'asservissement selon l'invention compense aussi les dérives éventuelles de la source de tension de polarisation, et des zéros des convertisseurs 15 et 17.

Il est à la portée de l'homme de l'art de réaliser différemment ces moyens d'asservissement, notamment en employant un circuit logique câblé au lieu d'un microprocesseur, ou bien en utilisant des circuits purement analogiques.

Il est possible aussi d'exploiter différemment l'amplitude de la raie, par exemple en la comprant à deux valeurs de seuil pour introduire une hystérésis dans le processus de décision d'un changement de la tension de polarisation.

L'invention est applicable à tout autre signal de modulation numérique comportant des niveaux discrets symétriques par rapport à une valeur nulle, notamment un signal comportant trois niveaux : O, $\frac{+ Vp}{2}, \frac{- Vp}{2}$, quel que soit le type de codage.

**Revendications**

1) Dispositif d'asservissement de la tension de polarisation d'une source optique (14) dont la puissance d'émission est modulée par une tension de commande (Vc) qui est la somme d'une tension continue (Vb) dite de polarisation et d'une tension (Vm) dite de modulation, centrée sur une tension nulle; cette tension de modulation pouvant prendre au moins deux valeurs discrètes pour représenter une suite de valeurs numériques ayant un rythme fixé; la puissance émise par cette source étant une fonction au moins approximativement symétrique de la tension de commande par rapport à une valeur (Vo), dite optimale, de la tension de polarisation, quand la tension de commande varie dans une plage de valeurs centrée sur cette valeur optimale (V$_0$) de la tension de polarisation; et cette valeur optimale étant susceptible de dériver ;

ce dispositif comportant :

- des moyens pour prélever une fraction du signal optique émis par la source (14), et la convertir en un signal électrique appelé signal prélevé;
- des moyens pour détecter un éventuel écart à corriger, entre la valeur (Vb) de la tension de polarisation et sa valeur optimale (V$_0$);
- et des moyens pour déduire une nouvelle valeur (Vb) de la tension de polarisation, plus proche de la valeur optimale, s'il y a un écart à corriger;

caractérisé ce que les moyens pour détecter un éventuel écart, comportent:

- des moyens (21 à 24) pour déterminer, dans le signal prélevé, l'amplitude d'une raie spectrale centrée sur une fréquence égale au rythme des valeurs numériques;

- des moyens (16) pour déterminer s'il y a ou non un écart à corriger, en fonction de l'amplitude de cette raie.

2) Dispositif selon la revendication 1, caractérisé en ce que les moyens pour détecter un éventuel écart à corriger, entre la valeur (Vb) de la tension de polarisation et sa valeur optimale (V$_0$), comportent :

- un filtre passe-bande (21) accordé sur le rythme des valeurs numériques, pour filtrer le signal prélevé;
- un détecteur d'amplitude (23) ayant une constante de temps très supérieure à la période des valeurs numériques, pour déterminer l'amplitude du signal filtré, cette amplitude représentant l'amplitude de la raie centrée sur la fréquence égale au rythme des valeurs numériques.

3) Dispositif selon la revendication 1, caractérisé en ce que les moyens pour déduire une nouvelle valeur (Vb) de la tension de polarisation comportent :

- des moyens (40 à 43, 36' à 39') pour incrémenter la valeur (Vb) de la tension de polarisation, et vérifier si une telle incrémentation réduit l'amplitude (H) du signal filtré;
- des moyens (36 à 39, 40' à 43') pour décrémenter la valeur (Vb) de la tension de polarisation, et vérifier si une telle décrémentaion réduit l'amplitude (H) du signal filtré.

# FIG.1

# FIG.2

# FIG.3

# FIG.4

14

11

13

18

25

Vc

10 · Vm

12

Vb

15

16

19

20

21

22

23

Vb

17

H

24

# FIG.5

H

D

G

S

E

F

0

V0

Vb

# FIG.6

Office européen
des brevets

# RAPPORT DE RECHERCHE EUROPEENNE

Numero de la demande

EP 94 40 1478

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 8, no. 109 (P-275) (1546) 22 Mai 1984 & JP-A-59 017 527 (TOKYO SHIBAURA DENKI) 28 Janvier 1984 * abrégé * | 1,2 | G02F1/03 H01S3/133 |
| A | US-A-4 698 817 (BURLEY) 6 Octobre 1987 * colonne 2, ligne 1 - ligne 27 * * colonne 3, ligne 24 - colonne 4, ligne 53; figures 3,4 * | 1,2 | |
| A | US-A-4 253 734 (KOMURASAKI ET AL.) 3 Mars 1981 * le document en entier * | 1,2 | |
| A | US-A-4 162 398 (KAYANUMA) 24 Juillet 1979 * colonne 2, ligne 35 - colonne 3, ligne 68; figures 1-4 * | 1-3 | |
| A | EP-A-0 448 832 (HUGHES AIRCRAFT) 2 Octobre 1991 * colonne 2, ligne 17 - colonne 3, ligne 47 * * colonne 4, ligne 30 - colonne 6, ligne 22; figures 2-5 * | 1-3 | **DOMAINES TECHNIQUES RECHERCHES (Int.Cl.6)** G02F H01S |
| D,A | ELECTRONICS LETTERS, vol.27, no.11, 23 Mai 1991, STEVENAGE, GB pages 943 - 945, XP232440 T. KATAOKA ET AL. 'Novel Automatic Bias Voltage Control for Travelling-Wave Electrode Optical Modulators' * abrégé * | 1 | |

Le présent rapport a été établi pour toutes les revendications

| Lieu de la recherche | Date d'achèvement de la recherche | Examinateur |
|---|---|---|
| LA HAYE | 19 Septembre 1994 | Stang, I |